# EUROPEAN PATENT SPECIFICATION

(11) **EP 0 993 808 B1**
(45) Date of publication and mention of the grant of the patent: **01.02.2006**
(21) Application number: 99830642.7
(22) Date of filing: 11.10.1999
(51) Int. Cl.: A61C 1/00

(54) **A control unit for dental handpiece functions**
Steuereinheit für Funktionen zahnärtztlicher Handstücke
Unité de contrôle des fonctions de pièces à main dentaires

(30) Priority: 13.10.1998 IT BO980582
(43) Date of publication of application: 19.04.2000
(73) Proprietor: CASTELLINI S.p.A., I-40013 Castel Maggiore (Bologna) (IT)
(72) Inventor: Castellini, Franco, 40124 Bologna (IT)
(74) Representative: Lanzoni, Luciano

(56) References cited:
- EP-A- 0 845 247
- WO-A-94/10931

## Description

The present invention relates to a unit for controlling the functions of dental handpieces used on dental units.

At present, in the dental unit production sector, particular attention is devoted to the study of electronic - information technology systems which allow the activation and control of all functions on the unit while treating patients and outside of treatment.

These functions, in the form of specific data for each type of operating handpiece or accessory instrument, are grouped together and stored thanks to systems which use microprocessors connected both to displays which allow them to be read and sensor units showing the parts being used and those in the home position.

This type of solution (in the name of the Applicant, see patent application EP - 734.689, and further improvements illustrated in patent application EP - 845.247, and PCT number WO 94/10931 upon which prior art the two-part form of claim 1 is based) envisages a console with a microprocessor, integrated in a table or instrument tray on the dental unit.

The console has a display with a first portion having a fixed number of fields for viewing dental unit operating function data or fields used for passing to screen pages with other fields for viewing accessory function data along a line on the display. The accessory function data is combined with a set of first push-buttons for editing - activating the operating function or passage field data, located outside the display, corresponding to the fixed viewing fields and activating the function corresponding to the viewing field displayed each time.

In other words, if the dental surgeon picks up a handpiece from the table, the microprocessor recognises the type of handpiece picked up (thanks to sensors fitted to the table for this purpose), and a screen page relating to that handpiece appears on the display. For example, if the handpiece is a micromotor, said screen page displays the operating data relative to the speed, the handpiece reduction or multiplication ratio, percentage power which can be supplied, etc., while part of the fields for the string below displays the increase or reduction or the activation - reversal of rotation, effected using the above-mentioned first push-buttons, of the handpiece operating data.

To extend and optimise the system, especially the operating and treatment decisions made by the dental surgeon, the microprocessor stores a set of memory banks, or operating modes in parallel for each of the handpieces, to allow a rapid change from one mode to another, more suitable mode for the treatment to be carried out at that moment.

Using this type of system, the Applicant, always sensitive to the requirements of the dental surgeon regarding particular handpiece operating modes (for example, during implant operations), has designed and produced a unit, integrated in the system described above, which makes it possible to obtain further handpiece parameter settings, in particular for the values of the micromotor handpiece maximum torque, even according to the reduction or multiplication ratio used, linked to the control of the number of micromotor revolutions possible.

The technical features of the present invention, in accordance with the above aims, are apparent in the claims herein, and the advantages are more clearly described in the detailed description below, with reference to the accompanying drawing, which illustrates a preferred embodiment of the invention, without limiting the scope of the claims, and which shows a schematic view of the handpiece function control unit made in accordance with the present invention.

With reference to the accompanying drawing, the unit disclosed is used to control the functions of dental handpieces used on dental units.

These units (not fully illustrated, being of the known type and not part of the subject matter of the present invention) envisage a microprocessor unit 1 for monitoring the dental unit, connected to and acting upon a display 2 for viewing main screen pages 3 of operating function data relative to the selected main and auxiliary devices (for example, main and auxiliary handpieces, labelled 4) or static devices (for example, water circuits, air circuits, liquid temperatures, lights, etc.).

This data is divided between and can be viewed in viewing fields CV on the display (a screen page is illustrated in the drawing) and some data may be edited, using activation - editing means 5, that is to say, push-buttons 5p located below the display 2 and connected to the microprocessor unit 1, according to the type of operation that the dental surgeon must carry out (the system is fully described in patent application EP - 734.689 and subsequent application EP - 845.247 by the Applicant).

For each main device, that is to say, for each handpiece 4, the system has adjustment and control means 6, preferably consisting of an extension of the microprocessor unit 1, for the handpiece auxiliary operating parameters PA, which interact with the above-mentioned operating function data displayed in the main screen pages 3.

The auxiliary parameters PA are set, or may be set, in a screen page 7 dependent on the main screen page 3, so as to obtain a preset handpiece 4 operating condition.

In other words, the handpiece 4 control system has one or more "sub-screen pages" 7, in addition to the main screen page 3 which is activated at the moment in which the desired handpiece 4 is selected, and with which the handpiece 4 may be fine-tuned for the operation to be carried out. Said sub-screen pages 7 must be selected directly by the dental surgeon using the means 5p in order for them to be viewed on the display 2 (they may be selected from viewing field CV1).

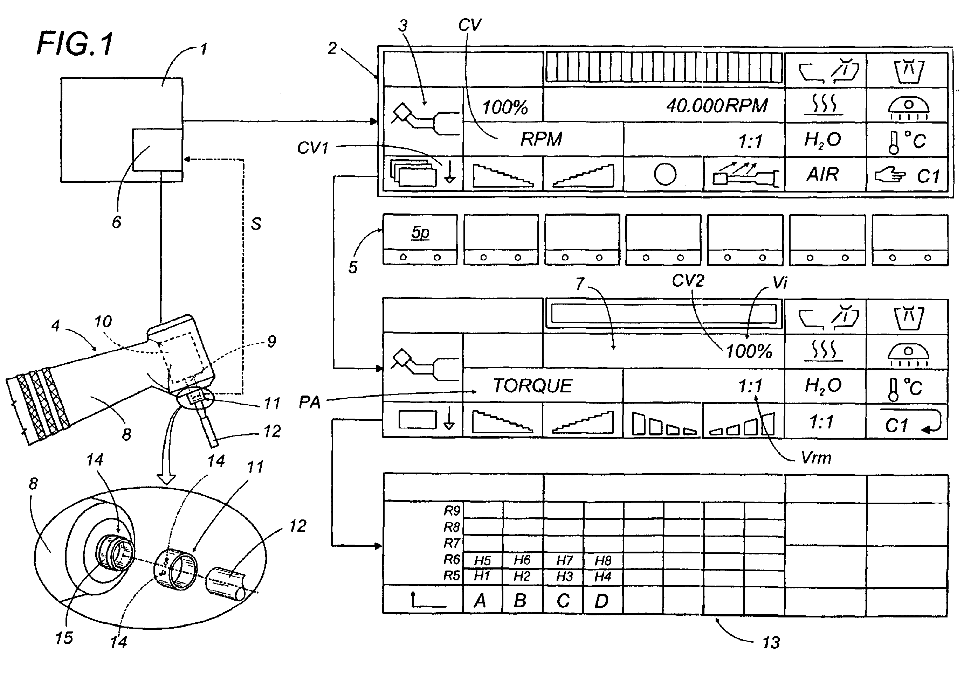

In an embodiment according to the invention illustrated schematically in Figure 1, a micromotor 8, which is part of the main handpieces 4, has a motor 10 with a drive shaft 9 and means 11 for reducing - multiplying the number of revolutions, it being possible to insert the means 11 between the drive shaft 9 and a tool 12.

In this specific case, if selected, the adjustment and control means 6 activate a sub-screen 7, acting upon a value Vi which indicates the approximate torque value which can be measured on the tool 12.

This approximate value Vi appears on the display 2 in a viewing field CV2 according to the reduction - multiplication value Vrm used, so as to regulate the percentage torque value. In practice, the dental surgeon can change the maximum percentage torque value allowed on the micromotor 8 according to the treatment required by the patient.

For an indication of the maximum approximate value Vi, there is another sub-screen page 13 (again see the accompanying drawing), indicating the percentage value to be set as the approximate torque value Vi in accordance with the reduction - multiplication value Vrm and with the work to be carried out. In this way, the dental surgeon can be rapidly and reliably informed of the percentage to be set in the previous screen page.

In the accompanying drawing, the reduction - multiplication ratios on the Y-axis are labelled R1, R2, Rn, etc., whilst the operations which can be performed by the dental surgeon (such as an implant, tapping operation, etc.) on the X-axis may be labelled with letters A, B, C, etc. The graphics contain separate fields which may contain approximate percentage values Vi, labelled H1, H2, H3, Hn, etc., recommended for the type of operation and with the preset or available reduction - multiplication ratio.

A further extension and improvement to the system could consist in connecting the adjustment and control means 6 to a unit 14 which identifies the reduction - multiplication means 11 on the micromotor 8, located on the micromotor and designed to send the control means 6 a signal S corresponding to a reduction - multiplication value Vrm applied and which can be stored in the viewing field CV in the main and auxiliary screen pages 3 and 7.

The unit 14 may be an integral part of the micromotor 8 body and may consist, for example, of a clamp 15 with contacts (for example, electrical) that can be connected to corresponding poles on the reduction - multiplication means 11 according to the type of reduction or multiplication value on the means.

A unit thus structured, therefore, fulfils the stated aims, thanks to a targeted extension of the auxiliary parameters necessary for good operation of the handpieces on the dental unit. This extension has a positive effect on handpiece setting, without increasing the workload of or slowing down the dental surgeon and, instead, allowing the latter to optimise his/her use of the handpieces.

The invention described can be subject to modifications and variations without thereby departing from the scope of the claims.

## Claims

1. A control unit for the functions of dental handpieces used on dental units comprising a microprocessor unit (1) for monitoring the dental unit, being connected to and acting upon a display (2) for viewing main screen pages (3) of operating function data relative to at least selected main or auxiliary devices, such as dental handpieces (4); said data being in viewing fields (CV) on the display and it being possible to edit the data according to the type of operation to be performed, using activation - editing means (5) connected to the microprocessor unit (1), for each handpiece (4) there being means (6) for adjusting and controlling the handpiece auxiliary operating parameters (PA), interacting with the operating function data displayed in the screen pages (3), the auxiliary parameters (PA) being set, or it being possible to set them in a screen page (7) dependent on the main screen page (3), in such a way as to obtain a preset handpiece (4) operating condition, said handpiece being a micromotor and comprising means (11) for reducing-multiplying the number of revolutions; **characterised in that** the control unit further comprises a sub screen page (13) indicating an approximate torque percentage value (Vi) of the micromotor to be set according to the reduction-multiplication value (Vrm) and according to the work to be done.

2. The unit according to claim 1, in which the handpiece has a motor (10) drive shaft (9), it being possible to insert said means for reducing-multiplying the number of revolutions between the drive shaft (9) and a tool (12), the unit being **characterised in that** the adjustment and control means (6) act on the value (Vi) indicating the approximate torque value which can be measured on the tool (12), said approximate value (Vi) being shown in a viewing field on the display (2) according to the reduction-multiplication value (Vrm) used, in such a way as to regulate the percentage torque value.

3. The unit according to claims 1 and 2, **characterised in that** the adjustment and control means (6) are connected to a unit (14) for identifying the reduction-multiplication means (11) on the handpiece (4), being located on the handpiece and designated to send the control means (6) a signal (S) corresponding to a reduction-multiplication value (Vrm) applied and which can be stored in the viewing field (CV) in the main and auxiliary screen pages (3, 7).

4. The unit according to claim 1, **characterised in that** the adjustment and control means (6) are connected to the microprocessor unit (1).

## Patentansprüche

1. Steuereinheit für die Funktionen von zahnärztlichen Handstücken, verwendet an zahnärztlichen Einheiten und enthaltend eine Mikroprozessoreinheit (1) zur Überwachung der zahnärztlichen Einheit, angeschlossen an und wirkend auf einen Bildschirm (2) zur Sichtbarmachung der Hauptbildschirmseiten (3) mit Betriebsfunktionsdaten, die sich wenigstens auf gewählte Haupt- oder Hilfsvorrichtungen, wie zahnärztliche Handstücke (4) beziehen; wobei die genannten Daten in Sichtfeldern (CV) auf dem Bildschirm erscheinen, und wobei es möglich ist, die Daten je nach der Art der auszuführenden Arbeit zu editieren, indem an die Mikroprozessoreinheit (1) angeschlossene Aktivier-Editiermittel (5) benutzt werden, wobei für jedes Handstück (4) Mittel (6) zum Regulieren und Steuern von Hilfsparametern (PA) für den Betrieb des Handstückes vorhanden sind, die mit den auf den Bildschirmseiten (3) angezeigten Betriebsfunktionsdaten zusammenwirken, wobei die Hilfsparameter (PA) in eine von der Hauptbildschirmseite (3) abhängige Bildschirmseite (7) eingegeben sind oder es möglich ist, sie einzugeben, und zwar auf solche Weise, dass ein vorgegebener Betriebszustand des Handstückes (4) erhalten wird, wobei das genannte Handstück (4) ein Mikromotor ist und Mittel (11) zum Reduzieren - Multiplizieren der Drehzahlen enthält; **dadurch gekennzeichnet, dass** die Steuereinheit ausserdem eine Bildschirmunterseite (13) enthält, die einen annähernden prozentualen Drehmomentwert (Vi) des Mikromotors anzeigt, der je nach dem Reduzier-Multiplizier-Wert (Vrm) und nach der auszuführenden Arbeit einzugeben ist.

2. Einheit nach Patentanspruch 1, bei welcher das Handstück eine Antriebswelle (9) für einen Motor (10) hat, wobei es möglich ist, die genannten Mittel zum Reduzieren - Multiplizieren der Drehzahlen zwischen der Antriebswelle (9) und einem Werkzeug (12) einzusetzen, wobei die Einheit **dadurch gekennzeichnet ist, dass** die Regulier- und Steuermittel (6) auf einen Wert (Vi) wirken, der den annähernden Drehmomentwert angibt, welcher an dem Werkzeug (12) gemessen werden kann, wobei der genannte annähernde Wert (Vi) in einem Sichtfeld auf dem Bildschirm (2) angezeigt wird, je nach dem verwendeten Reduzier-Multiplizier-Wert (Vrm), und zwar auf solche Weise, dass der prozentuale Drehmomentwert reguliert wird.

3. Einheit nach den Patentansprüchen 1 und 2, **dadurch gekennzeichnet, dass** die Regulier- und Steuermittel (6) an eine Einheit (14) zum Erkennen der Reduzier-Multiplizier-Mittel (11) an dem Handstück (4) angeschlossen sind, die an dem Handstück angeordnet und dazu bestimmt sind, an die Steuermittel (6) ein Signal (S) auszusenden, das einem Reduzier-Multiplizier-Wert (Vrm) entspricht, welcher angewandt ist und in dem Sichtfeld (CV) in den Haupt- und Hilfsbildschirmseiten (3, 7) gespeichert werden kann.

4. Einheit nach Patentanspruch 1, **dadurch gekennzeichnet, dass** die Regulier- und Steuermittel (6) an die Mikroprozessoreinheit (1) angeschlossen sind.

## Revendications

1. Une unité de contrôle des fonctions de pièces à main dentaires utilisées sur des unités pour soins dentaires comprenant une unité à microprocesseur (1) pour le monitorage de l'unité pour soins dentaires, reliée à et agissant sur un afficheur (2) pour la visualisation de pages-écrans principales (3) de données de fonction opératoires relatives à au moins des dispositifs principaux ou auxiliaires sélectionnés tels que des pièces à main dentaires (4) ; lesdites données étant situées dans des champs de visualisation (CV) présents sur l'afficheur et pouvant être modifiées en fonction du type d'opération à effectuer par l'intermédiaire de moyens d'activation - modification (5) reliés à l'unité à microprocesseur (1), pour chaque pièce à main (4), des moyens (6) étant prévus pour le réglage et le contrôle de paramètres auxiliaires (PA) de fonctionnement de la pièce à main, interagissant avec les données de fonction opératoires affichées sur les pages-écrans (3), les paramètres auxiliaires (PA) étant définis, ou pouvant être définis, dans une page-écran (7) qui dépend de la page-écran principale (3) de manière à obtenir une condition opératoire prédéfinie de la pièce à main (4), ladite pièce à main étant un micromoteur et comprenant des moyens (11) pour la réduction - multiplication du nombre de tours ; ladite unité de contrôle étant **caractérisée en ce qu'**elle comprend en outre une sous-page-écran (13) indiquant une valeur approchée en pourcentage (Vi) du couple du micromoteur devant être définie en fonction de la valeur de réduction - multiplication (Vrm) et en fonction du travail à effectuer.

2. L'unité selon la revendication 1, dans laquelle la pièce à main a un arbre (9) d'entraînement du moteur (10), lesdits moyens de réduction - multiplication du nombre de tours pouvant être insérés entre l'arbre d'entraînement (9) et un outil (12), **caractérisée en ce que** les moyens de réglage et de contrôle (6) agissent sur la valeur (Vi) indiquant la valeur de couple approchée qui peut être mesurée sur l'outil (12), ladite valeur approchée (Vi) étant affichée dans un champ de visualisation de l'afficheur (2) en fonction de la valeur de réduction - multiplication (Vrm) utilisée, de manière à régler la valeur de couple en pourcentage.

3. L'unité selon les revendications 1 et 2, **caractérisée en ce que** les moyens de réglage et de contrôle (6) sont reliés à un groupe (14) d'identification des moyens de réduction - multiplication (11) présents sur la pièce à main (4), situé sur la pièce à main elle-même et destiné à envoyer aux moyens de contrôle (6) un signal (S) correspondant à une valeur de réduction - multiplication (Vrm) appliquée et qui peut être mémorisée dans le champ de visualisation (CV) des pages-écrans principales et auxiliaires (3, 7).

4. L'unité selon la revendication 1, **caractérisée en ce que** les moyens de réglage et de contrôle (6) sont reliés à l'unité à microprocesseur (1).
